(19)

Europäisches
Patentamt
European
Patent Office
Office européen
des brevets

(11) **EP 1 924 034 A1**

(12) **EUROPEAN PATENT APPLICATION**

(43) Date of publication:
**21.05.2008 Bulletin 2008/21**

(51) Int Cl.:
***H04L 12/56*** (2006.01)

(21) Application number: **06425784.3**

(22) Date of filing: **17.11.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK RS**

(71) Applicant: **Nokia Siemens Networks GmbH & Co.
KG
81541 München (DE)**

(72) Inventors:
• **Trivisonno, Riccardo
  20146 Milano (IT)**
• **Masseroni, Carlo
  20017 Rho (MI) (IT)**
• **Ballarini, Enrico
  37025 Verona (IT)**

(54) **Method and apparatus for admission control and radio resource scheduling in wireless systems, corresponding system and computer program product**

(57)    A method of controlling admission and scheduling radio resources in a wireless systems such a WiMAX network includes the step of admitting service requests only if at the time of the service request the system is able to pre-allocate the amount of radio resources required to provide the service at the time instant the resources are required. The services are arranged in a set of Quality of Service (QoS) classes (UGS, ERT-VR, RT-VR, NRT-VR, BE) to which priorities are assigned. Admission control and radio resource scheduling is performed by sharing the radio resources available among the QoS classes as a function of the priorities, whereby the QoS classes having a lower priority (RT-VR) may utilize the amount of resources left unused by the classes having a higher priority (UGS, ERT-VR). Pre-allocating the radio resources involves the operation of pre-provisioning the time frames for serving a given user as a function of ideal service times at which the user should be served in order to maintain a constant information flow by taking the maximum tolerated jitter as a delay constraint. In the presence of a plurality of users pre-provisioned with different respective service time frames, the respective service time frames are combined in a common multi-frame. A pre-scheduling data structure is compiled with a list of CIDs and respective data grant sizes for each frame in the form of a multiframe wheel structure.

FIG. 1

| | Tolerated Jitter | Minimum Reserved Traffic Rate | Maximum Sustained Traffic Rate | Maximum Traffic Burst | Maximum Latency | Traffic Priority |
|---|---|---|---|---|---|---|
| UGS | X | X | | | X | |
| ERT-VR | X | X | X | X | X | X |
| RT-VR | | X | X | X | X | X |
| NRT-VR | | X | X | X | | X |
| BE | | | X | X | | X |

EP 1 924 034 A1

**Description**

Field of the invention

The invention relates to admission control and radio resource scheduling in wireless communication systems.
The invention was developed with specific attention paid to its possible use in managing admission control and radio resource scheduling for conversational and real time services in wireless mobile systems such as e.g. WiMAX systems, i.e. systems conforming to the IEEE802.16e standard.

Description of the related art

Various approaches have been proposed over the years to address the problem of admission control and radio resource scheduling.
Exemplary of related literature are e.g.:

- IEEE Computer Society and IEEE Microwave Theory and Techniques Society, "IEEE Standard for Local and Metropolitan Area Networks Part 16: Air Interface for Fixed Broadband Wireless Access Systems", IEEE Std 802.16e™-2005 and IEEE Std 802.16™-2004/Cor1-2005;
- J. Klaue, J. Gross, H. Karl, A. Wolisz, "Semantic-Aware Link Layer Scheduling of MPEG-4 Video Streams in Wireless Systems", Applications and Services in Wireless networks, July 2003; and
- M. Andrews, K. Kuramaran, K. Ramanan et al., "Providing Quality of Service over a Shared Wireless Link", IEEE Communications Magazine, Feb. 2001.

Object and summary of the invention

Despite their effectiveness, the prior art solutions as described, e.g. in the exemplary documents cited in the foregoing, fail to provide a joint Admission Control (AC) and Radio Resource Management (RRM) arrangement for the optimum support of conversational and real time services.
More specifically, the need is felt for:

- low complexity admission control and scheduling procedures that are easy to implement in practice,
- modular schedulers capable of acting separately on different QoS (Quality of Service) classes as different classes can be enabled by a network operator, and
- cell load maximization arrangements capable of fulfilling QoS requirements for conversational and real time services (VoIP with or without silence suppression, audio/video streaming).

The object of the invention is thus to provide a response to the need outlined in the foregoing.
According to the present invention, such an object is achieved by means of a method having the features set forth in claim 1. Advantageous developments of the inventions are called for in the subclaims. The invention also relates to corresponding apparatus, a corresponding communication system as well as a computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.
The claims are an integral part of the disclosure of the invention provided herein.
A preferred embodiment of the arrangement described herein is based on a modular joint Admission Control/ Radio Resource scheduling procedure which may be advantageously applied in managing real time and conversational services in WiMax systems. Such a procedure is based on the pre-scheduling concept the definition of a logical "multi-frame wheel", periodical scheduling structure patterned after the QoS profiles of the services to be supported; the procedure is based on a modularity concept, i.e. distinct sub-procedures have been designed for different traffic classes, with different Quality of Service (QoS) profiles.
The corresponding arrangement can be advantageously employed e.g. in a downlink Radio Resource Manager (comprising the Admission Control, the Radio Resource Allocation and the Radio Resource Scheduler procedures) for a WiMAX (IEEE 802.16e standard) base station.
The related preferred design complies with low complexity constraints and addresses the management of UGS (Unsolicited Grant Service), ERT-VR (Extended Real-Time Variable Rate) and RTVR (Real-Time Variable Rate) QoS Classes, on which VoIP (i.e. Voice over IP, with and without silence suppression) and Video Streaming Services are supported.

A particularly preferred embodiment of the arrangement described herein is a joint Admission Control, Radio Resource Assignment and Scheduling procedure designed to manage conversational and real time services on the radio interface of wireless mobile systems, which minimizes procedure complexity and computational cost.

While a preferred scenario of application is represented by WiMAX systems, i.e. systems complying with the IEEE 802.16e standard, the arrangement described herein can be used advantageously in all those systems that support multimedia conversational and real time services.

A basic concept underlying the arrangement described herein is to admit (in the Admission Control phase of the procedure) service requests only if, at the time of the service request, the system is able to perform the pre-allocation of the exact amount of radio resources in the exact time instant they are required (to fulfill service QoS profile requirements in terms of e.g. data packet latency and delay jitter).

If Radio Resources (RR) are available for the incoming service, the RR pre-allocation (RR assignment phase of the procedure) is actually performed and a pre-scheduling data structure is compiled. The RR scheduling (RR scheduling phase of the procedure) then occurs simply by scanning the pre-scheduled data structure.

Brief description of the annexed representations

The invention will now be described, by way of example only, with reference to the annexed figures of drawing, wherein:

- Figure 1 is diagram generally representative of services supported by a system as described herein, and
- Figures 2 to 5 are representative of various frame arrangement schemes within a system as described herein.

Detailed description of preferred embodiments

The following description of a preferred embodiment of the arrangement described herein refers, by way of example, to a WiMAX (IEEE 802.16e) communication system.

The IEEE 802.16e standard supports five different data delivery services, onto which all services supported within a WiMAX system can be properly mapped.

These services include:

- Unsolicited Grant Service or UGS (e.g. T1/E1 backhaul, VoIP without silence suppression);
- Extended Real-Time Variable Rate Service or ERT-VR (e.g. VoIP with silence suppression, interactive gaming, videophone);
- Real-Time Variable Rate Service or RTVR (e.g. MPEG video, audio and video streaming, interactive gaming);
- Non Real-Time Variable Rate Service or NRTVR (e.g. FTR, browsing, video download, video on demand);
- Best Effort or BE (e-mail, Internet browsing).

Each data delivery service has an associated QoS profile identified by a number of parameters and corresponding allowed ranges of values.

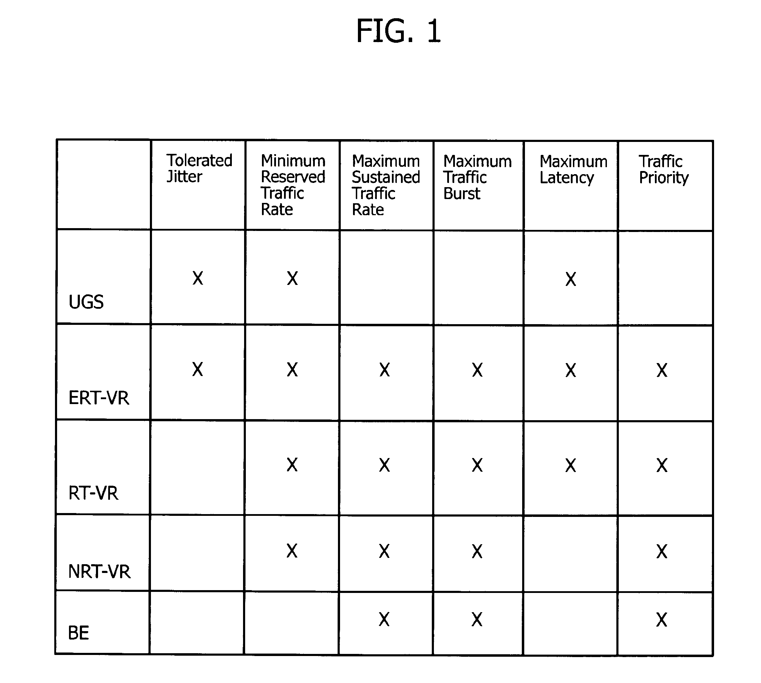

The diagram of Figure 1 shows typical QoS profiles associated to the five data delivery services considered in the foregoing and based on the following parameters:

- Tolerated Jitter;
- Minimum Reserved Traffic Rate;
- Maximum Sustained Traffic Rate;
- Maximum Traffic Burst;
- Maximum Latency;
- Traffic Priority.

The presence of an "x" mark at the crossing of a line and a column in the diagram of Figure 1 indicates that the parameter in the corresponding column is included in the QoS profile for the service in the corresponding line.

Quite obviously, the choice of the QoS profile parameters is in no way limited to the parameters exemplified here.

Essentially, Figure 1 is representative of a possible mapping scheme between QoS classes and services: VoIP-like services exploiting voice codec without silence suppression are mapped onto the UGS service class; VoIP-like services exploiting voice codec with silence suppression are mapped onto the ERT-VR service class; finally, real time multimedia streaming are mapped onto the RTVR service class.

Turning first to IEEE 802.16e Conversational and Real Time Services - QoS mapping, the Modular QoS AC/Scheduler Design considered herein is modular in that it acts separately, in cascade and with different criteria on the three QoS classes considered.

More precisely:

- i) the total amount of radio resources available in the cell (of the WiMAX network considered as an example) is shared among the different QoS classes. Each sub-procedure (i.e. the part of the procedure related to each specific QoS class) notionally acts only on the radio resources dedicated to the corresponding QoS class;
- ii) the global procedure acts in cascade on different QoS classes, i.e., by assigning priorities to the different classes, and lower priority service classes may utilize the amount of resources left unused by the higher ones;
- iii) for the three QoS classes considered in the procedure (UGS, eRTVR and RTVR), an ad-hoc sub-procedure is defined, based on the most severe QoS parameters present in the class profiles. Typically, the tolerated jitter and the maximum latency are considered for the UGS and ERT-VR classes, and the maximum latency and the minimum reserved traffic rate are considered for the RTVR class.

Considering now the Multiframe Pre-Scheduling Structure definition, the Pre-Scheduling strategy employs two major parameters defined at connection start up, namely:

- Unsolicited Grant Interval (UGI), i.e. the constant period between the arrival of consecutive packets;
- Maximum Tolerated Jitter, i.e. the maximum delay with respect to the ideal service time.

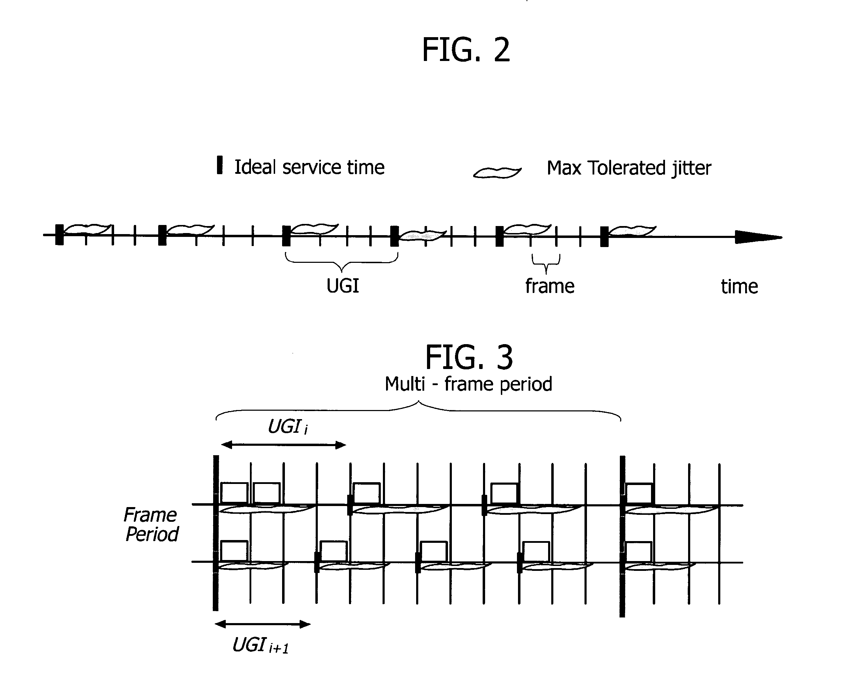

Figure 2 shows the relationship of the ideal service time with jitter and UGI. The ideal service times are periodically defined as the frames at which the connection should be served in order to maintain a constant flow reference.

This kind of representation allows the Admission Control to pre-provision the exact frames at which a particular Connection IDentifier (CID) must be served, by taking the maximum tolerated jitter as a delay constraint. In addition, the definition of a Multiframe structure simply derives from applying the same strategy to all the other connections.

The different CID periodicities, in terms of UGIs, can be combined in a unique common period in such a way to enclose all the possible UGIs intersections, as depicted in Figure 3. Specifically, Figure 3 shows the definition of a Multi-frame structure starting from two different UGIs of two connections. Considering the same frame as the initial ideal service time, the Multiframe is defined as the minimum periodical number of frames after which the ideal service times are still overlapping. This period is evaluated as the least common multiple (l.c.m.) among all the UGIs, as shown in the equation below.

$$\texttt{Multiframe = l.c.m.[UGI}_i\texttt{], } \forall i \in \texttt{Active CID set}$$

In this example, two UGIs are considered (i.e. 4 and 3 frames respect exactly all the combinations of ideal service times.

In respect of the UGS Admission Control and Pre-Scheduling Criterion, the Admission Control procedure is used to decide if a Service Flow can be admitted and activated in the Base Station of the cell. The requested QoS for the Service Flow is checked against the available radio resources of the cell. The admission is successful only in case the requested QoS can be provided without degradation of the committed QoS for ongoing calls.

Admission Control procedures usually decide to admit a service flow by considering only one QoS parameter, such as the minimum reserved traffic rate. For applications requiring a high QoS level, such as VoIP, this is definitely not enough and other QoS parameters have to be taken into account.

Even if the average system spare capacity is larger than the minimum reserved traffic rate required by the CID QoS set, in certain cases connection is refused because the necessary capacity is not available at one single frame occurrence at which the connection strictly needs a data transmission. This could lead to a periodical inability to transmit one or more SDUs (Service Data Unit) within the maximum tolerated number of frames (i.e. the maximum tolerated jitter).

By applying the concept of UGI dependent Multiframe, any jitter-based Admission Control issue can easily be addressed (AC phase of the procedure) by giving rise to a low complexity, high performance scheduling policy (RR scheduling phase of the procedure).

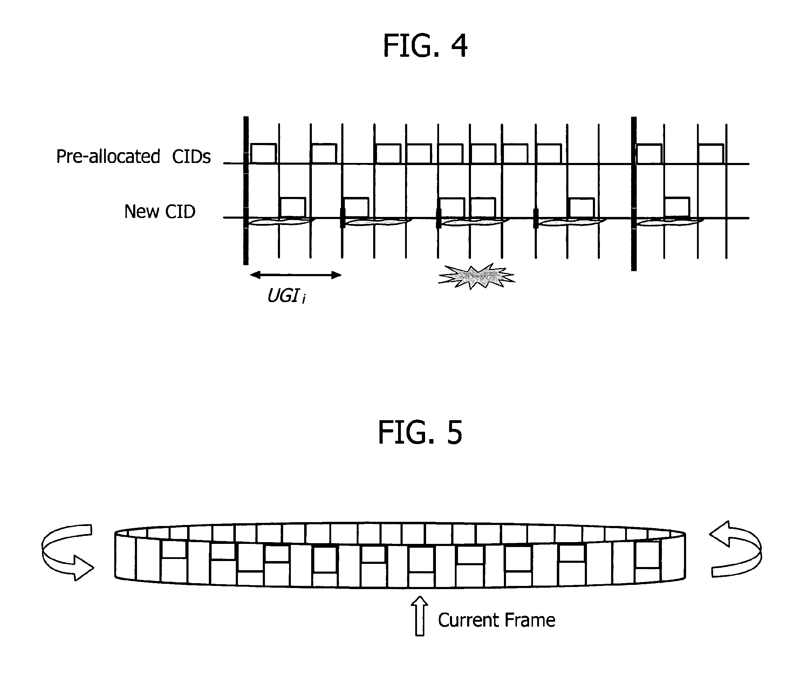

Figure 4 illustrates the jitter induced admission control problem. In the first line or row, Pre-allocated CIDs are depicted on a frame basis, the white spaces therebetween being indicative of the fact that the radio resources available for that frame are enough for allocating the new incoming connection data grant opportunity, i.e. SDU transmission. The second line or row shows the ideal service times of the new CID and the corresponding jitter within a Multiframe period. The new CID requires one data grant opportunity at each UGI, hence a total of four SDU transmissions per Multiframe.

By checking the system spare capacity on the first row, four SDU transmissions are allowed; hence the common Admission criterion will accept a new connection, just considering the minimum reserved traffic rate,.

The example in Figure 4 shows that for jitter constraints the radio resources at the third UGI are not enough for a SDU transmission within the two tolerated frames. A final remark suggested by this example is that one SDU out of four cannot be transmitted, and only a jitter-based admission control procedure, such as this one proposed, can address the problem.

The Admission Control criterion is then responsible for evaluating the best frames to which the ideal service times are to be associated in order to minimize possible conflicts due to the jitter constraints illustrated above.

The AC phase of the procedure illustrated simply performs a RR assignment by compiling a data structure with a list of CIDs and respective data grant sizes for each frame. The resulting input for the final phase of the procedure (i.e. RR Scheduling) is a periodical Multiframe wheel structure as illustrated in Figure 5.

By proceeding on a frame-by-frame basis, the scheduler merely scans the pre-provisioned list of CIDs and to allots to each of them the associated amount of RR. This results in a Round-Robin like packet selection procedure with QoS awareness as described e.g. in the article by M. Andrews, et al. already cited in the introductory part of this description.

As regards the ERT-VR Admission Control and Pre-Scheduling Criterion, the possibility exists also for ERT-VR CIDs - as in the case of the UGS Admission Control procedure previously described - of foreseeing the ideal service times for the whole Multiframe length. This is due to the availability since the same two parameters defined previously (i.e. maximum tolerated jitter and UGI).

A difference however exists compared to the UGS case in that ERT connections are characterized by a variable bit rate, whereby the sizes of SDU pre-allocations can vary from frame to frame. The approach proposed for UGS pre-allocation (RR assignment phase of the procedure) can still be extended to this QoS class by noting that the SDU pre-allocation size can be the average SDU size E[SDU_size] evaluated as follows:

$$\texttt{E[SDU\_size] = Minimum\_Reserved\_Traffic\_Rate·UGI}$$

Once transmission starts, the scheduler adjusts the instant grant size as a function of the average size. Since the number of connections served in a single frame is high, the amount of total RRs requested by different CIDs in the same frame will, on the average, be very close to those which have been pre-allocated.

As regards the RTVR Admission Control and Pre-Scheduling Criterion, the applications mapped onto this QoS class are not sensitive to jitter constraints. Hence the Admission Control procedure focuses on the Maximum Latency parameter.

The introduction of the Multiframe structure presented in the previous sections enables the AC phase of the procedure to evaluate the average amount of RR available within a Multiframe period after the scheduling of higher priority classes (i.e. UGS and ERT-VR). This information is significant as it gives the minimum period in which it is possible to guarantee the RT-VR connections bit rate, that is exactly the Multiframe period.

Since this time interval is known, it is now possible to admit those connections that require a minimum rate lower than the average available traffic rate and with a maximum latency requirement larger than the Multiframe period previously evaluated.

To sum up, the arrangement described herein employs a RR Management Mechanism with a number of significant features.

A first one is the Modular and Cascade RR Management.

Modularity essentially means that different RR management strategies apply to different QoS Classes: operators can thus implement/enable only RR procedures related to the QoS classes of the services supported.

"Cascade" operation means that the procedure reserves and manages radio resources by giving different priority to different QoS Classes. Each QoS class can utilize Radio resource not used by higher priority QoS Classes already allocated/scheduled.

Another significant feature is related to the Joint Admission Control and Pre-Scheduling Phases (for UGS and ERT-VR). The procedure performs simultaneously (i.e. at the same time) the admission control and the pre-scheduling phases: once the timely availability of the required amount of RRs is verified, the service is admitted in the system and its RRs scheduling is pre-defined.

Still another significant feature lies in that one has to deal with a procedure based on a single QoS parameter in that each procedure utilizes a single parameter of the QoS profile (i.e. the strictest one).

As indicated, the arrangement described herein involves a Multi Frame Wheel Structure: the AC and Pre-Scheduling concepts are implemented via the definition of the logical structure designated a Multi Frame Wheel (Figure 5). This is created and updated according to the QoS profiles of the services admitted, which gives the timing for the services scheduling phase.

The performance level of the approach described herein has been evaluated via MAC layer activity tests.

Specifically, the RR Management procedure performance has been investigated in a variety of different scenarios (different traffic mixes, different channel models and different mobility profiles).

Different performance indicators have been considered (fairness among different CIDs, SDU Loss Ratio, end-to-end delays).

Procedure performance has been evaluated in terms of:

- maximum allowed traffic per cell according to QoS constraints;
- SDU Loss ratio performance vs. offered traffic load, comparing the approach described herein with a conventional average rate based AC control scheme.

Specifically, performance has been tested by comparing conventional average rate based AC with Jitter Based AC as described herein.

The results reported refer to VoIP traffic, with each user equipped with a codec randomly selected among seven different options, with varying bit rate and jitter requirements. The corresponding results are reported in Table 1 below. Different users having a mobility profile selected out of three classes (3, 20, 50 Km/h). The channel model corresponds to SUI-2.

Table 1 VoIP codecs parameters

| VoIP codec | Rate (kbps) | Interarrival period (UGI) (ms) | Max. Jitter (ms) |
| --- | --- | --- | --- |
| G.722.1 | 24 / 32 | 20 | 16 |
| G.723.1 | 5.6 / 6.3 | 30 | 16 |
| G.729 | 8 | 10 | 8 |
| G.726 | 16 / 32 | 20 | 16 |

SDU Loss Ratio is defined as the ratio of SDUs lost because of the scheduler (i.e. jitter requirements not respected) to the total number of SDUs to be served. For VoIP applications with strong jitter requirements, retransmission schemes such as ARQ cannot be applied to reduce the number of channel induced errors. Hence the typical values of SDU Loss Ratio to consider are lower than or equal to 1%.

Common Admission Control procedures take into account the total bandwidth employed by the users already admitted in the system, while jitter-based Admission Control also considers jitter requirements.

The results show that Jitter-based Admission Control provides better performance. In particular, by setting the target SDU Loss Ratio at 1%, Jitter-based AC serves slightly less than 3000 kbit/s, while average rate AC stops slightly above 2900 kbit/s.

The Admission Control procedure described herein offers improved performance in terms of traffic serviced, and also provides a useful criterion to stop admitting new connections before they may cause degradation in he performance of the CIDs already in the system.

Performance of the arrangement described herein was also tested in terms of fairness among different VoIP connections. Experiments were carried out with a SUI-2 channel model and with pedestrian users only (i.e. 3 km/h) under different load conditions.

The results show that the higher the number of CIDs admitted, the higher the level of single CID SDU Loss Ratio. This means that if no Jitter-Based Admission Control criterion is used, no potential will exist for detecting if the admission of a new connection may adversely affect the performance of previously admitted CIDs.

The Jitter-Based Admission Control procedure described herein makes it possible to pre-evaluate the level of possible conflicts caused by the admission of a new connection and to decide whether such a new connection is still tolerable or not.

This could lead to the rejection of a VoIP connection with acceptable average required rate, but with jitter constraints incompatible with pre-admitted CIDs. In the case of average-rate-based procedures, recognizing these VoIP codecs in order to reject their admission would be impossible. The jitter-based Admission Control procedure described herein improves system performance since, after rejecting a potentially incompatible connection, the procedure is still able to accept a new codec requiring the same bit rate but with less stringent jitter constraints.

Admission Control, RR Assignment and RR Scheduling procedures are performed jointly, as they are merged into a unique procedure based on a pre-scheduling concept. The joint procedure described is modular on a QoS class basis, i.e. it acts in a cascaded manner and with different techniques according to the QoS classes supported by the system. AC/RR Assignment and RR Scheduling for each QoS class is dictated by the aim of meeting the most critical QoS constraints for each QoS class. AC and RR Assignment and Scheduling rely on the concept of multi-frame scheduling structure described in the following.

The procedure described applies primarily to conversational and real time services (e.g. VoIP-like services, video call, IP-TV, multimedia streaming etc.): these are considered to be among the most challenging services for Admission Control and scheduling and also include all those services expected to be the leading services in WiMAX systems.

Consequently, without prejudice to the underlying principles of the invention, the details and the embodiments may vary, even appreciably, with reference to what has been described by way of example only, without departing from the scope of the invention as defined by the annexed claims.

**Claims**

1. A method of controlling admission and scheduling radio resources in wireless communication systems, wherein the system receives from users requests for services to be provided by means of said radio resources by meeting given Quality of Service requirements, the method including the steps of:

   - checking, at the time of a service request, if the system is able to pre-allocate the amount of radio resources required to provide the service requested at the time instant said resources are required, and
   - admitting said service requests only if, at the time of the service request, the system is able to pre-allocate the amount of radio resources required to provide the service requested at the time instant said resources are required.

2. The method of claim 1, wherein said Quality of Service requirements are expressed as a function of at least one parameter selected out of delay jitter, packet latency, reserved traffic rate, sustained traffic rate, traffic burst, and traffic priority.

3. The method of either of claims 1 or 2, including, when said service requests are admitted, the step of pre-allocating said radio resources required to provide the service.

4. The method of claim 3, including the step of pre-allocating said radio resources required to provide the service by compiling a pre-scheduling data structure.

5. The method of either of claims 3 or 4, including, when said service requests are admitted, the step of scheduling said radio resources required to provide the service on the basis of said step of pre-allocating.

6. The method of claim 4 and claim 5, wherein said step of scheduling said radio resources includes scanning said pre-scheduled data structure.

7. The method of any of the preceding claims, including the step of admitting said service requests only if the requested Quality of Service can be provided without degradation of the committed Quality of Service for ongoing calls.

8. The method of any of the preceding claims, wherein said services are arranged in a set of Quality of Service classes (UGS, ERT-VR, RT-VR, NRT-VR, BE) and wherein said controlling admission and scheduling radio resources is performed separately for at least a subset (UGS, ERT-VR, RT-VR) of Quality of Service classes in said set.

9. The method of claim 8, including the steps of:

   - sharing said radio resources available among the Quality of Service classes in at least said subset (UGS, ERT-VR, RT-VR) of Quality of Service classes;
   - assigning priorities to said Quality of Service classes in at least said subset (UGS, ERT-VR, RT-VR) of Quality of Service classes, whereby at least said subset (UGS, ERT-VR, RT-VR) of Quality of Service classes includes Quality of Service classes having higher (UGS, ERT-VR) and lower (RT-VR) priorities respectively; and
   - performing said operations of controlling admission and scheduling radio resources for said Quality of Service classes in at least said subset (UGS, ERT-VR, RT-VR) of Quality of Service classes as a function of said priorities, whereby said Quality of Service classes having a lower priority (RT-VR) may utilize the amount of resources left unused by said Quality of Service classes having a higher priority (UGS, ERT-VR).

10. The method of either of claims 8 or 9, wherein said subset of Quality of Service classes includes services selected out of Unsolicited Grant Service (UGS), Extended Real-Time Variable Rate (ERT-VR) and Real-Time Variable Rate (ERT-VR) services.

11. The method of claim 10, wherein tolerated jitter and maximum latency are considered as Quality of Service parameters for said Unsolicited Grant Service (UGS) and Extended Real-Time Variable Rate (ERT-VR) services.

12. The method of claim 10, wherein the maximum latency and the minimum reserved traffic rate are considered as Quality of Service parameters for said Real-Time Variable Rate (RT-VR) services.

13. The method of any of the previous claims, wherein said step of pre-allocating said radio resources involves the operation of pre-provisioning the time frames for serving a given user as a function of ideal service times at which the user should be served in order to maintain a constant information flow by taking the maximum tolerated jitter as a delay constraint.

14. The method of claim 13, wherein, in the presence of a plurality of users pre-provisioned with different respective service time frames, it includes the step of combining said respective service time frames in a common multi-frame defined as the minimum periodical number of frames after which said ideal service times are still overlapping.

15. The method of claim 4 and claim 14, wherein said pre-scheduling data structure is compiled with a list of connection identifiers and respective data grant sizes for each frame in the form of a multiframe wheel structure.

16. The method of claim 15, wherein said scheduling of radio resources involves frame-by-frame scanning said list of connection identifiers and allocating to each said connection identifier the amount of radio resources associated thereto in a Round-Robin selection procedure.

17. The method of claim 9 and claim 14, including the steps of evaluating the average amount of radio resources left available within a multiframe period after the scheduling of said Quality of Service classes having a higher priority (UGS, ERT-VR) wherein said multiframe period identifies the minimum period in which it is possible to guarantee service of said Quality of Service classes having a lower priority (RT-VR).

18. Apparatus for controlling admission and scheduling radio resources in wireless systems, wherein the system receives from users requests for services to be provided by means of said radio resources by meeting given Quality of Service requirements, the apparatus being configured for performing the steps of any of claims 1 to 17.

19. A communication system including the apparatus of claim 18.

20. A computer program product, loadable in the memory of at least one computer and including software code portions for performing the steps of the method of any of claims 1 to 17 when the product is run on a computer.

# FIG. 1

| | Tolerated Jitter | Minimum Reserved Traffic Rate | Maximum Sustained Traffic Rate | Maximum Traffic Burst | Maximum Latency | Traffic Priority |
|---|---|---|---|---|---|---|
| UGS | X | X | | | X | |
| ERT-VR | X | X | X | X | X | X |
| RT-VR | | X | X | X | X | X |
| NRT-VR | | X | X | X | | X |
| BE | | | X | X | | X |

EP 1 924 034 A1

FIG. 2

Ideal service time          Max Tolerated jitter

UGI

frame

time

FIG. 3
Multi - frame period

$UGI_i$

$UGI_{i+1}$

Frame
Period

# FIG. 4

Pre-allocated CIDs

New CID

$UGI_i$

# FIG. 5

Current Frame

**European Patent Office**

## EUROPEAN SEARCH REPORT

Application Number

EP 06 42 5784

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | OU YANG ET AL: "Call admission control and scheduling schemes with QoS support for real-time video applications in IEEE 802.16 networks" JOURNAL OF MULTIMEDIA, [Online] vol. 1, no. 2, May 2006 (2006-05), pages 21-29, XP002430973 ISSN: 1796-2048 INSPEC : AN - 9304224 Retrieved from the Internet: URL:http://academypublisher.com/jmm/vol01/no02/jmm01022129.pdf> [retrieved on 2007-04-23] * page 21, right-hand column, lines 17-34 * * page 22, left-hand column, line 28 - page 26, right-hand column, line 8 * * figures 2,3,5,6 * ----- | 1-20 | INV. H04L12/56 |
| X | ALEXANDER SAYENKO, OLLI ALANEN, JUHA KARHULA, TIMO H"AM"AL"AINEN: "Ensuring the QoS Requirements in 802.16 Scheduling"[Online] 2 October 2006 (2006-10-02), - 6 October 2006 (2006-10-06) pages 108-117, XP002430978 MSWiM 2006, Torremolinos, Malaga, Spain. ISBN: 978-1-59593-477-2 Compendex: AN - E20064610242750 Retrieved from the Internet: URL:http://portal.acm.org/citation.cfm?id=1164737&coll=Portal&dl=GUIDE&CFID=20753910&CFTOKEN=89581410> [retrieved on 2007-04-23] * page 108, right-hand column, line 21 - page 113, left-hand column, line 17 * ----- -/-- | 1-20 | TECHNICAL FIELDS SEARCHED (IPC) H04L |

The present search report has been drawn up for all claims

| Place of search | Date of completion of the search | Examiner |
|---|---|---|
| The Hague | 25 April 2007 | Puiulet, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                          

& : member of the same patent family, corresponding document

EPO FORM 1503 03.82 (P04C01)

European Patent
Office

**EUROPEAN SEARCH REPORT**

Application Number

EP 06 42 5784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/045051 A1 (FLOROS ANDREAS [GR] ET AL) 2 March 2006 (2006-03-02) * the whole document * ----- | 1-20 | |
| A | HAITANG WANG ET AL: "Dynamic admission control and QoS for 802.16 wireless MAN" WIRELESS TELECOMMUNICATIONS SYMPOSIUM, 2005 POMONA, CA, USA APRIL 28-30, 2005, PISCATAWAY, NJ, USA,IEEE, [Online] 28 April 2005 (2005-04-28), pages 60-66, XP010846551 ISBN: 0-7803-8856-9 Retrieved from the Internet: URL:http://ieeexplore.ieee.org/iel5/10227/32603/01524765.pdf?tp=&isnumber=&arnumber=1524765> [retrieved on 2007-04-23] * the whole document * ----- | 1-20 | |

TECHNICAL FIELDS
SEARCHED    (IPC)

The present search report has been drawn up for all claims

| Place of search | Date of completion of the search | Examiner |
|---|---|---|
| The Hague | 25 April 2007 | Puiulet, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 42 5784

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2007

| Patent document cited in search report | Publication date | Patent family member(s) | Publication date |
|---|---|---|---|
| US 2006045051 A1 | 02-03-2006 | NONE | |

EPO FORM P0459

# EP 1 924 034 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **J. KLAUE ; J. GROSS ; H. KARL ; A. WOLISZ.** Semantic-Aware Link Layer Scheduling of MPEG-4 Video Streams in Wireless Systems. *Applications and Services in Wireless networks,* July 2003

- **M. ANDREWS ; K. KURAMARAN ; K. RAMANAN et al.** Providing Quality of Service over a Shared Wireless Link. *IEEE Communications Magazine,* February 2001